**Europäisches Patentamt**

**European Patent Office**

**Office européen des brevets**

(19)

(11) Veröffentlichungsnummer: **0 123 006**
**B1**

(12)

# EUROPÄISCHE PATENTSCHRIFT

(45) Veröffentlichungstag der Patentschrift:
**02.09.87**

(21) Anmeldenummer: **83810173.1**

(22) Anmeldetag: **26.04.83**

(51) Int. Cl.⁴: **A 61 C 13/30**, A 61 C 5/08,
A 61 C 13/26

(54) **Anker für die Dental-Prothetik.**

(43) Veröffentlichungstag der Anmeldung:
**31.10.84 Patentblatt 84/44**

(45) Bekanntmachung des Hinweises auf die Patenterteilung:
**02.09.87 Patentblatt 87/36**

(84) Benannte Vertragsstaaten:
**AT CH DE FR GB IT LI**

(56) Entgegenhaltungen:
**EP-A-0 043 343**
**CH-A-370 191**
**DE-A-2 903 583**
**DE-C-1 088 188**
**DE-U-1 606 988**

(73) Patentinhaber: **Szücs, Peter, Rosenweg 5 /
Berikon, CH- 8968 Mutschellen (CH)**

(72) Erfinder: **Szücs, Peter, Rosenweg 5 / Berikon, CH-
8968 Mutschellen (CH)**

(74) Vertreter: **Seehof, Michel, c/o AMMANN
PATENTANWAELTE AG BERN Schwarztorstrasse
31, CH- 3001 Bern (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die vorliegende Erfindung bezieht sich auf einen Anker für die Dentalprothetik, mit einem im Querschnitt kreisrunden Retentionsstift mit einem Kopf für den künstlichen Zahnaufbau und einem Haftteil, wobei der Anker ein mit einer nach dem dem Zahnaufbau entgegengesetzten Ende sich konisch verjüngenden Bohrung versehenes Verankerungselement aufweist und der entsprechend der Bohrung konisch sich verjüngende Haftteil des Retentionsstiftes mit stumpfem Ende darin befestigbar ist.

Ein solcher Anker bzw. Wurzelstift ist aus der CH-A-370 191 bekannt und weist eine aus Feinsilber bestehende Hülse als Verankerungsteil auf, die eine glattwandige, konische Bohrung parallel zur Längsachse aufweist, in die das Haftteil des Retentionsstiftes passt. Sowohl die Hülse als auch der Retentionsstift werden einzementiert, das heisst, dass der Zahnaufbau nicht abnehmbar ist. Ausserdem ist eine Anpassung des Zahnaufbaus, falls es sich beispielsweise um eine Brücke handelt, schwierig, da die Richtung des Retentionsstiftes in der Bohrung vorgegeben ist.

Aus der DE-A-2 903 583 ist ferner ein zahnprothetischer Kupplungsteil bekannt, der zur Halterung von herausnehmbarem Zahnersatz dient, wobei dieser Kupplungsteil aus zwei ineinandergreifenden Koni sind und der äussere Konus mit mindestens einer Krone starr verbunden it. In dieser Schrift ist nirgends angedeutet, den Aussenkonus als Verankerungselement bzw. Zahnwurzelstift oder Zahnkanalanker auszubilden.

Die DE-U-1 606 988 beschreibt Aufbaukerne für Jacketkronen mit einem Rohling von zylindrischer Grundform, dessen unterer, zur Verankerung in der Wurzel dienender Teil gegen den oberen Teil abgesetzt ist und eine Bohrung für den Wurzelstift aufweist. Die zur Aufnahme des Wurzelstiftes dienende Bohrung braucht dabei nicht mit der zu ihr parallelen Achse des kronentragenden Teils zusammenzufallen. Der Wurzelstift weist einen zylindrischen Querschnitt auf. Der Rohling wird aufgepresst und ist nicht abnehmbar.

Schliesslich ist aus der EP-A-0043343 ein Wurzelstift bekannt, der im Querschnitt kreisrund ist und einen Kopf für den künstlichen Zahnaufbau aufweist und dessen Verankerungsteil sich zum Zahnwurzelende hin konisch verjüngt und eine umlaufende Verankerungsrippe aufweist.

Bei solchen Zahnwurzelkanalankern für Stiftkronen ist der Wunsch entstanden, den Kopf mitsamt dem künstlichen Zahnaufbau auswechseln zu können, ohne den ganzen Zahnwurzelkanalanker aus der Verankerung zu lösen. Ausserdem gibt es eine grosse Anzahl von Zahnprothesen mit abnehmbaren Kronen, insbesondere solche mit partiellen und hybriden Prothesen und gefrästen Stegen, bei welchen jedoch die Aussenmasse und die Totalhöhe relativ gross sind, und es ist das Bestreben vorhanden, diese Ausmasse zu vermindern.

Daraus folgend ist es das Ziel der vorliegenden Erfindung einen Anker anzugeben, der sowohl das Auswechseln von einzelnen Kronen als auch die Herabsetzung der Aussenmasse von Zahnprothesen und das leichte Auswechseln von Prothesenteilen erlaubt. Ein Anker, der diese Aufgaben erfüllt, ist in Anspruch 1 beschrieben. Ferner soll es mit diesem Anker möglich sein, nicht-parallele Zahnachsen von künstlichen Zahnaufbauten parallel auszurichten.

Die Erfindung wird nun im einzelnen anhand einer Zeichnung von Ausführungsbeispielen näher erläutert werden.

Figur 1 zeigt einen erfindungsmässigen Anker, und

Figur 2 zeigt ein Anwendungsbeispiel des Ankers gemäss Figur 1.

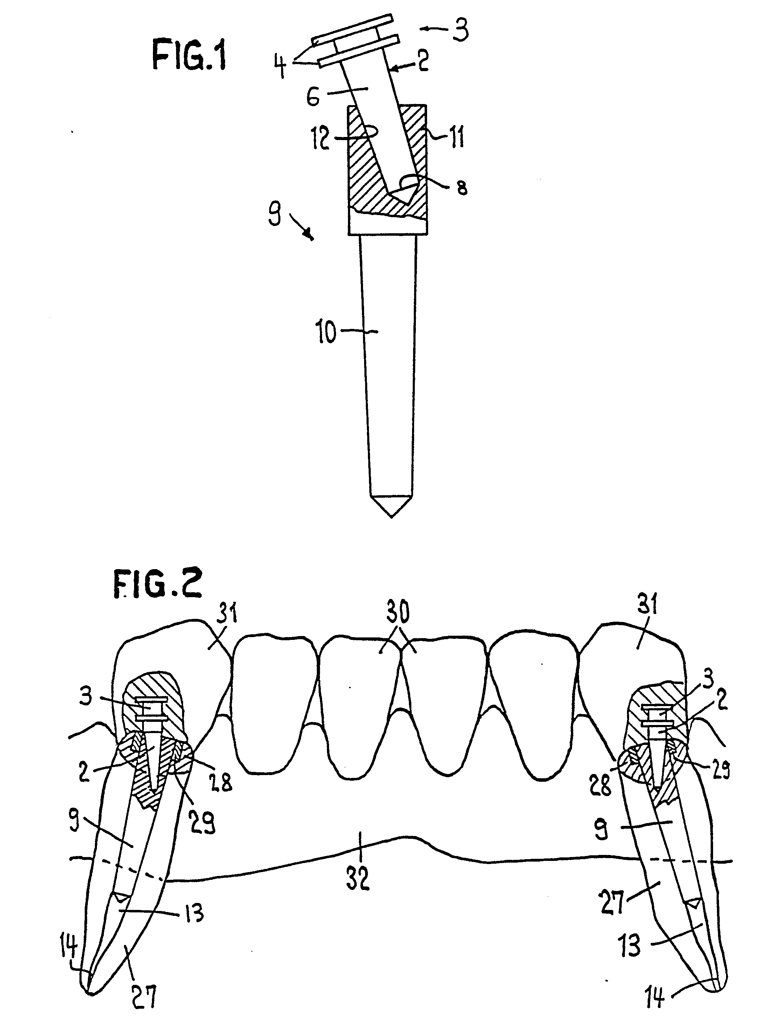

Das Verankerungselement 9 gemäss Figur 1 besteht aus einem konisch nach unten, das heisst zum Kopf dem entgegengesetzen Ende sich verjüngenden, vollen Stiftteil 10 und einem Befestigungsteil 11, in welchem eine bezüglich der Längsachse des Verankerungselementes exzentrische und geneigte Bohrung 12 angebracht ist, die die gleiche Konizität wie der in diese Bohrung passende Haftteil 6 des Retentionsstiftes 2 mit dem Kopf 3 für den künstlichen Zahnaufbau aufweist. Dabei kann der Kopf zwei oder mehr Flügel 4 aufweisen, die in der Regel mit Nuten versehen sind. Dadurch ist eine reibungsschlüssige Befestigung des Stiftes im Befestigungsteil möglich. Das Ende 8 des Stiftes ist stumpf, um ein Ausweichen der Luft beim Hineinpressen des Stiftes zu ermöglichen. Bei der Anwendung gemäss Figur 2 wird das Verankerungselement 9 beim Befestigungsteil 11 angelötet, so dass der Stiftteil 10 glattwandig sein kann.

Es ist aber auch möglich, die Verankerungselemente statt anzulöten direkt wie ein Zahnwurzelkanalanker im Zahnwurzelkanal zu befestigen. Dabei ist es zweckmässig, die äussere Oberfläche des Stiftteils 10 auf der ganzen Länge mit einer abgerundeten Verankerungsrippe wie bei der eingangs erwähnten EP-A-0043343 zu versehen und die Konizität dieser Hülse oder des Stiftteils innerhalb der gleichen Grenzen zu wählen, d.h. innerhalb 1 bis 5°. In diesem Falle sollten die Verankerungselemente in Längsrichtung angeordnete Schneid- und Zemententlasungsnuten aufweisen.

In Figur 2 ist ein Anwendungsbeipsiel des Ankers gemäss Figur 1 anhand einer Prothese dargestellt. Man erkennt die beiden Zahnwurzeln 27 der Eckzähne mit je einem Zahnwurzelkanal 13, der in den Nervkanal 14 übergeht und in welchen je ein Verankerungselement 9 mit exzentrischer Bohrung 12 mittels einer Goldkappe 28 und Wurzelinlay 29 befestigt ist. Die künstlichen Zähne 30 und die beiden äusseren künstlichen Zahnaufbauten 31 sind in der Prothesenbasis 32 befestigt. Die beiden künstlichen Zahnaufbauten 31 sind um den Kopf 3 des Retentionsstiftes 2 aufgebaut. Wie aus Figur 2 in anschaulicher Weise hervorgeht, kann durch Verdrehen des exzentrisch gebohrten Verankerungsteils eine bestehende Nichtparallelität der Zahnachsen ausgeglichen werden, wodurch ein genaueres Anpassen der Prothese ermöglicht wird.

Das aufgeführte Anwendungsbeispiel ist nur ein sehr kleiner Ausschnitt aus möglichen Anwendungen des Verankerungselementes gemäss Figur 1 oder 2. Es sind darüber hinaus noch eine ganze Anzahl von Anwendungsmöglichkeiten gegeben, beispielsweise bei resilienten Verankerungen, d.h. wenn das Retentionsteil mit einem Weichkunststoff überzogen ist, so dass man sie bei partiellen oder hybriden Prothesen mit Vertikaltranslation und Rotation anwenden kann. Ausserdem ist es möglich, solche Anker bei Retentionselementen zu verwenden, z. B. bei abnehmbaren Stabilisierungsschienen, Platten, Transversalbügeln und Bügelstücken, die am Restzahnbestand zu befestigen sind. Ausserdem können solche Anker auch zum Anlöten oder Angiessen an abnehmbare Goldarbeiten, beispielsweise gefräste Rillen, fortlaufende Klammern oder Schultergeschiebe, verwendet werden.

## Patentansprüche

1. Anker für die Dentalprothetik, mit einem im Querschnitt kreisrunden Retentionsstift (2) mit einem Kopf (3) für den künstlichen Zahnaufbau und einem Haftteil (6), wobei der Anker ein mit einer nach dem dem Zahnaufbau entgegengesetzten Ende sich konisch verjüngenden Bohrung (12) versehenes Verankerungselement (9) aufweist und der entsprechend der Bohrung (12) konisch sich verjüngende Haftteil (6) des Retentionsstiftes (2) mit stumpfem Ende (8) darin befestigbar ist, dadurch gekennzeichnet, dass das Verankerungselement (9) aus einem vollen Stiftteil (10) und einem Befestigungsteil (11) besteht, die sich verjüngende Bohrung (12) bezüglich der Längsachse des Verankerungselementes (9) exzentrisch und geneigt angeordnet ist und das Haftteil (6) des Retentionsstiftes (2) reibungsschlüssig und abnehmbar darin befestigt ist.

2. Anker nach Anspruch 1, dadurch gekennzeichnet, dass der Stiftteil (10) des Verankerungselementes (9) sich mit 1 bis 5° konisch verjüngt und auf dessen ganzen Länge eine abgerundete Verankerungsrippe sowie Schneid- und Zementlastungsnuten aufweist.

## Claims

1. A dental prosthetic anchor with a retaining pin of circular cross section (2) with a head (3) for the construction of artificial teeth and an adhesive part (6), the anchor comprising an anchoring element (9) provided with a taper hole (12) the diameter of which decreasing towards the extremity opposite to the head for the construction of the teeth and the taper adhesive part (6) of the retaining pin (2) with a troncated end (8) the diameter of which decreasing in accordance to the hole (12) being capable to be fastened in this hole, characterized in that the anchoring element (9) consists in a full pin part (10) and a fastening part (11), the hole (12) of decreasing diameter being arranged with an inclination eccentrically relatively to the longitudinal axis of the anchoring element (9) and in that the adhesive part (6) of the retaining pin (2) is removably fastened in this hole by friction.

2. An anchor according ot claim 1, characterized in that the diameter of the pin part (10) of the anchoring element (9) decreases conically by 1 to 5° and in that it comprises on its full length a rounded anchoring rib as well as cutting and cement discharging groove.

## Revendications

1. Ancrage pour la prothétique dentaire, avec un pivot de rétention de section circulaire (2) avec une tête (3) pour la construction de dents artificielles et une partie adhésive (6), l'ancrage comprenant un élément d'ancrage (9) pourvu d'un perçage conique (12) dont le diamètre diminue vers l'extrémité opposée à la tête pour la construction des dents, et la partie adhésive conique (6) du pivot de rétention (2) avec une extrémité tronquée (8) dont le diamètre diminue selon le perçage (12) étant susceptible d'être fixée dans ce perçage, caractérisé en ce que l'élément d'ancrage (9) consiste en une partie de pivot pleine (10) et une partie de fixation (11), le perçage (12) de diamètre diminuant étant disposé avec une inclinaison et excentriquement relativement à l'axe longitudinal de l'élément d'ancrage (9), et en ce que la partie adhésive (6) du pivot de rétention (2) est fixée de manière amovible dans ce perçage par frottement.

2. Ancrage selon la revendication 1, caractérisé en ce que le diamètre de la partie de pivot (10) de l'élément d'ancrage (9) diminue de 1 à 5° de manière conique et qu'il comprend sur toute sa longueur une nervure d'ancrage arrondie ainsi que des gorges de coupe et de décharge de ciment.

FIG.1

FIG.2